Europäisches Patentamt

European Patent Office

Office européen des brevets

(11) Veröffentlichungsnummer : **0 360 028 B1**

## (12) EUROPÄISCHE PATENTSCHRIFT

(45) Veröffentlichungstag der Patentschrift :
27.05.92 Patentblatt 92/22

(51) Int. Cl.⁵ : **F16L 59/20**

(21) Anmeldenummer : **89115686.1**

(22) Anmeldetag : **25.08.89**

---

### (54) Verfahren zum Verbinden von Fernwärmeleitungsrohren.

(30) Priorität : **17.09.88 DE 3831623**

(43) Veröffentlichungstag der Anmeldung :
**28.03.90 Patentblatt 90/13**

(45) Bekanntmachung des Hinweises auf die
Patenterteilung :
**27.05.92 Patentblatt 92/22**

(84) Benannte Vertragsstaaten :
**AT BE CH DE FR IT LI NL**

(56) Entgegenhaltungen :
**EP-A- 0 098 024**
**EP-A- 0 278 050**
**FR-A- 2 535 570**

(73) Patentinhaber : **DSD - Dillinger Stahlbau GmbH**
**Henry-Ford-Strasse**
**W-6630 Saarlouis (DE)**

(72) Erfinder : **Hero, Werner**
**Im Hänfert 20**
**W-6649 Weiskirchen (DE)**

(74) Vertreter : **Bernhardt, Winfrid, Dr.-Ing.**
**Kobenhüttenweg 43**
**W-6600 Saarbrücken (DE)**

**Beschreibung**

Die Erfindung betrifft ein Verfahren zum Verbinden von Fernwärmeleitungsrohren, die aus einem Mediumrohr aus Stahl, einem Mantelrohr aus Kunststoff und einer Schaumstoffüllung dazwischen bestehen, wobei an den zu verbindenden Enden die Mediumrohre freiliegen und verschweißt werden und dann darüber die Lücken zwischen den Mantelrohren und den Schaumstoffüllungen geschlossen werden durch bündiges Einsetzen eines Mantelrohr-Zwischenstücks von gleichem Material und gleicher Wanddicke wie die Mantelrohre und Ausschäumen des vorhandenen Zwischenraumes, wobei das Zwischenstück durch Schweißnähte, insbesondere V-Nähte, an den Stoßstellen mit den beiden angrenzenden Mantelrohren verbunden und an einem Längsdurchschnitt geschlossen wird und an diesem dafür eine Abstützung von innen her vorgesehen ist, die mit eingeschäumt wird.

Üblich ist bisher kein bündiges Zwischenstück des Mantelrohres, sondern eine Muffe. Die Muffe wird vor dem Verschweißen der Mediumrohrenden auf eines der beiden Mantelrohrenden aufgeschoben und dann über die Lücke geschoben und mit beiden Mantelrohrenden dicht verbunden. Darauf wird der Zwischenraum ausgeschäumt.

Obwohl auf die Verbindung der Muffe mit den beiden Mantelrohrenden große Sorgfalt gelegt wird und mehrere Verbindungsarten entwickelt und angewandt wurden, entstehen an den Verbindungen häufig Undichtigkeiten.

In der Erwägung, daß hierzu Schubkräfte beitragen, die infolge Wärmeausdehnung von Abschnitten der Fernwärmeleitung an den radial in das Erdreich vorspringenden und damit stärker festgehaltenen Muffen entstehen, hat man in der eingangs genannten Weise versucht, die Lücke zwischen den beiden Mantelrohrenden durch ein bündig eingesetztes Zwischenstück zu schließen. Da dieses Zwischenstück gleichen Durchmesser wie das übrige Mantelrohr hat, läßt es sich nur mit einem Längsdurchschnitt und etwas aufgespreizt auf ein Mantelrohrende aufschieben, stattdessen aber auch an dem Längsdurchschnitt so weit auseinanderziehen, daß es mit diesem von der Seite her über das Mediumrohr gebracht werden kann. Der Längsdurchschnitt mußte dann ebenso verschweißt werden wie die beiden Stoßstellen mit den angrenzenden Mantelrohrenden. Anschließend konnte der Zwischenraum wieder in bekannter Weise ausgeschäumt werden. An dem Längsdurchschnitt bedurfte das Zwischenstück allerdings einer, nachher mit eingeschäumten, komplizierten Abstützung vom Mediumrohr her, weil die Erhitzung sonst zu einem Schrumpfen des Kunststoffs in der Umgebung der Schweißnaht und damit zu einer Verformung des Zwischenstücks führt; es sinkt dort ein.

Aus der EP-A-0 098 024 ist eine Verbindung der eingangs genannten Art bekannt, jedoch mit dem Unterschied, daß das bündig eingesetzte Zwischenstück nicht durch Schweißnähte an den Stoßstellen mit den beiden angrenzenden Mantelrohren verbunden wird, sondern die Verbindung durch als Manschetten aufgelegte Streifen mit eingelegten Heizleitern hergestellt wird, indem durch Erhitzen mittels der Heizleiter die Streifen auf beiden Seiten verschweißt werden. In gleicher Weise wird der Längsdurchschnitt des Zwischenstücks geschlossen. Dafür wird unter dem Längsdurchschnitt eine Brücke eingesetzt. Die Brücke besteht zunächst aus zwei getrennten, spitzen Flacheisen, die mit ihren Spitzen unter dem Mantelrohr in die Schaumstoffüllung eingedrückt werden und dann in der Mitte mit einer Schraube verbunden werden, die sich als eine Abstützung bis auf das Mediumrohr erstreckt. Weitere solche Abstützungen sind erwähnt. Gegen die als Manschetten aufgelegten Streifen bestehen die gleichen Bedenken, wie sie oben gegen die Muffen vorgebracht sind. Sie stehen genauso außen über.

Ein etwa bündiger Abschluß an der Außenseite wird nach der FR-A-2 535 570 erzielt. Hier wird an den Mantelrohrenden jeweils ein Absatz etwa von der Hälfte der Mantelrohrdicke eingeschnitten und ein Muffenband darübergelegt, das sich an seinen Enden überlappt. Verschweißt wird an den Auflageflächen des Muffenbandes mit den Absätzen und zwischen den sich überlappenden Muffenbandenden durch zwischengelegte flache Streifen, in die wiederum ein Heizleiter eingelegt ist. Zur Abstützung an der Überlappung ist ein T-Profil in achsparallele Einschnitte an den stehengebliebenen Absätzen der Mantelrohrenden und in dem darunter befindlichen Schaumstoff eingesetzt.

Im wesentlichen die gleichen Maßnahmen hat derselbe Anmelder in der EP-A-0 278 050 vorgeschlagen, doch ohne Einschneiden von Absätzen an den Mantelrohrenden; der Querbalken des T-Profils und das Muffenband werden auf den unverminderten Außenumfang der Außenrohre gelegt. Damit treten wieder die Nachteile der Muffe ein. Darüberhinaus ergibt sich der auch an dem in Absätze bündig eingesetzten Muffenband zu verzeichnende Nachteil einer Unstetigkeit in der Rohrleitung, zumal das Muffenband um im einen Falle bündig in die Absätze zu passen und im anderen Falle nicht zu weit überzustehen eine wesentlich geringere Dicke als die Außenrohre hat.

Die Erfindung strebt demgegenüber einen möglichst stetigen Rohrverlauf an und greift zu diesem Zweck das eingangs angegebene, bündig eingesetzte Mantelrohr-Zwischenstück auf, das durch Schweißnähte an den Stoßstellen eingebunden wird. In diesem allgemeineren Aufgabenrahmen besteht ferner die Aufgabe, eine einfache, geeignete Abstützung für das Zwischenstück an dem Längsdurchschnitt zu schaffen.

Gemäß der Erfindung ist vorgesehen, daß bei dem eingangs genannten Verfahren die beiden Enden der angrenzenden Schaumstoffüllungen freigelegt werden und als die Abstützung eine Brücke über die Lücke zwischen den Schaumstoffüllungen gelegt und auf den freigelegten Enden der Schaumstoffüllungen abgestützt wird und dann das Mantelrohr-Zwischenstück über die freigelegten Enden und die Brücke gelegt und verschweißt wird.

Über die einfache und stabile Abstützung der Brücke auf den Enden der Schaumstoffüllungen unterhalb des Innendurchmessers der Mantelrohre hinaus ergibt sich dabei, daß das Zwischenstück sich über die freigelegten Enden hinweg erstreckt und seine Stoßstellen mit den Mantelrohrenden nicht mit den Endflächen der Schaumstoffüllungen zusammenfallen, so daß auch in dieser Beziehung die Unstetigkeit der Rohrleitung an der Verbindung vermindert wird und im übrigen auch die Schweißnähte an den Stoßstellen durch die Begrenzung von unten her gleichmäßiger werden.

Als weitere Ausgestaltung wird vorgeschlagen, daß eine aus einem Blech, vorzugsweise Aluminiumblech, zu einem U-Profil gekantete Brücke verwendet wird, dessen Schenkel in die Schaumstoffüllungen eingedrückt werden.

Das U-Profil ist ebenso einfach im Aufbau wie in seiner Anbringung, bei der sich die dünneren U-Schenkel leicht in den Schaumstoff einschneiden, und diese Anbringung ist dann trotzdem stabil und, im Gegensatz zu der bekannten Abstützung auf dem Mediumrohr, sicher gegen jegliches Verrutschen, sowohl in Axial als auch in Umfangsrichtung.

Die beiden Enden der angrenzenden Schaumstoffüllungen werden zweckmäßigerweise vor dem Auflegen der Brücke am Umfang etwas abgetragen, damit die gewünschte Flucht der Oberseite der Brücke mit der Unterseite der Mantelrohre genau eingerichtet werden kann. Der durch das Abtragen unter dem Zwischenstück weiter entstehende Hohlraum wird beim Ausschäumen gleichfalls gefüllt.

Die Zeichnung gibt ein Ausführungsbeispiel der Erfindung wieder.

Fig. 1 zeigt eine Verbindungsstelle von zwei aneinandergesetzten, noch zu verbindenden Fernwärmeleitungsrohren im Längsschnitt der Fernwärmeleitungsrohre,

Fig. 2 zeigt die Verbindungsstelle im gleichen Längsschnitt in einem Zwischenstadium,

Fig. 3 zeigt in größerem Maßstab den in Fig. 2 umkreisten Ausschnitt,

Fig. 4 zeigt die fertige Verbindungsstelle teils in Ansicht und teils im gleichen Längsschnitt,

Fig. 5 zeigt den in Fig. 4 umkreisten Längsschnitt in größerem 9 Maßstab,

Fig. 6 zeigt einen Schnitt nach Linie VI-VI in Fig. 5, aber in noch nicht ganz fertigem Zustand der Verbindungsstelle und

Fig. 7 zeigt in größerem Maßstab 9 einen Schnitt nach Linie VII-VII in Fig. 4.

Zwei Fernwärmeleitungsrohre 1 und 2 bestehen jeweils aus einem Mediumrohr 3, einem Mantelrohr 4 und einer Schaumstoffüllung 5 zwischen Mediumrohr und Mantelrohr. An den Enden der Fernwärmeleitungsrohre 1 und 2 ragt das Mediumrohr 3 ein Stück frei heraus, um beim Verlegen der Fernwärmeleitung verschweißt werden zu können. Die betreffende Schweißnaht ist mit 6 bezeichnet.

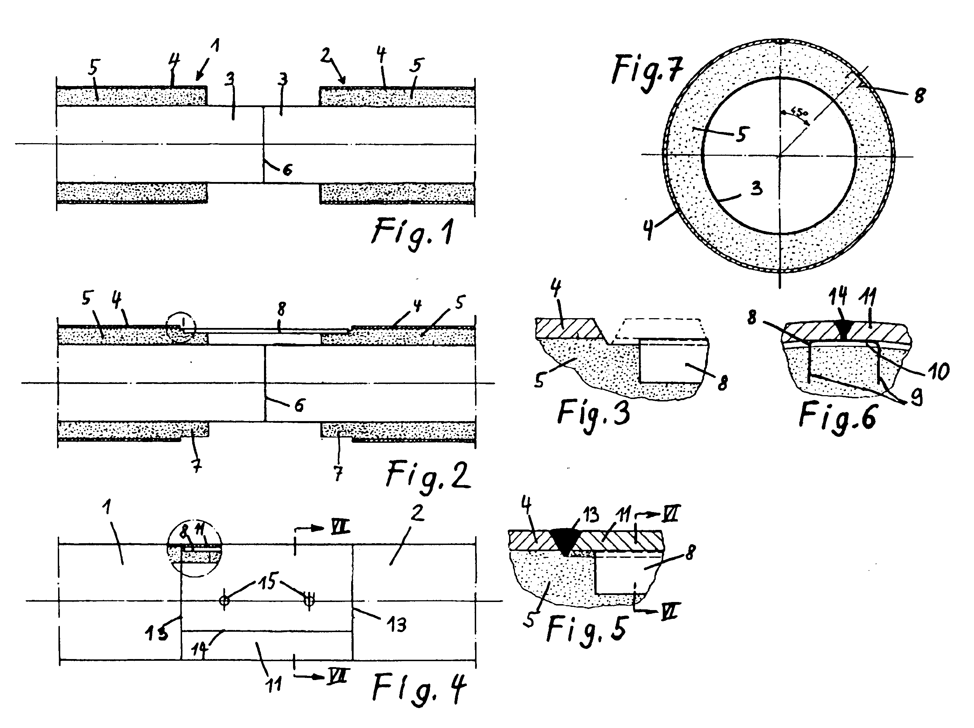

Nach Verschweißendem 9 des Mediumsrohres wird über die in Fig. 1 noch vorhandene axiale Lücke zwischen den Schaumstoffüllungen 5 der Fernwärmeleitungsrohre 1 und 2 eine Brücke 8 gelegt und jeweils an den beiden Leitungsrohrenden auf einem freigelegten und etwas abgeschälten Abschnitt 7 der Schaumstoffüllung 5 abgestützt.

Nach der Zeichnung ist, siehe den Unterschied zwischen Fig. 2 und Fig. 1, der Abschnitt 7 an der Baustelle freigelegt worden. Er könnte auch schon werksseitig vorgesehen werden, doch hat das Freilegen erst an der Baustelle den Vorteil, daß der schwächere Schaumstoff durch das festere Mantelrohr beim Transport und sonstigen Bewegen der Fernwärmeleitungsrohre geschützt bleibt.

Die Brücke 8 besteht beispielsweise aus zu einem U-Profil gekantetem Aluminiumblech und ist mit den U-Schenkeln 9 in die Schaumstoffüllung so tief eingedrückt, daß die Oberseite der Brücke mit bündig mit dem Außenumfang der Schaumstoffüllung 5 und dem Innenumfang des Mantelrohres 4 liegt. Darunter bleibt zwischen dem Aluminiumblech und der abgeschälten Schaumstofffüllung ein flacher Zwischenraum 10.

Daraufhin wird ein Zwischenstück 11 des Mantelrohres, das vorher beispielsweise auf das Fernwärmeleitungsrohr 2 aufgeschoben war, in die in Fig. 2 noch vorhandene axiale Lücke zwischen den Mantelrohren 2 geschoben und diese Lücke damit geschlossen.

Das Zwischenstück 11 ist von gleichem Material, gleicher Wanddicke und gleichem Durchmesser wie das Mantelrohr 4, aber an einer Stelle seiner Wandung parallel zur Rohrachse durchgeschnitten. An dem, mit 12 bzeichneten, Längsdurchschnitt klafft es auseinander, wenn es auf das eine Fernwärmeleitungsrohr aufgeschoben ist oder, bei genügender Elastizität, soweit aufgespreizt wird, daß es in dem Stadium nach Fig. 2 von der Seite her über die Manschette gebracht werden kann.

Der Längsdurchschnitt 12 wird in gleicher Weise verschweißt wie es die Stoßstellen zwischen dem Zwi-

3

schenstück 11 und dem Mantelrohr 4 der beiden Fernwärmeleitungsrhre 1 und 2 werden. Eine V-Naht 13 an einer der beiden Stoßstellen ist in Fig. 5 zu erkennen, eine V-Naht 14 an dem Längsdurchschnitt 12 in Fig.7.

Das Zwischenstück 11 ist beim Verschweißen des Längsdurchschnitts 12 an diesem von innen her durch die Brücke 8 unterstützt.

Dann wird in an sich bekannter Weise durch ein Loch oder mehrere Löcher 15 in dem Zwischenstück 11 hindurch der Hohlraum unter dem Zwischenstück 11 ausgeschäumt. Die Brücke 8 wird mit eingeschäumt. Fig. 4;5 und 7 zeigen das Stadium nach dem Ausschäumen. In Fig. 6 ist das Zwischenstück eingesetzt, aber noch nicht ausgeschäumt.

## Patentansprüche

1. Verfahren zum Verbinden von Fernwärmeleitungsrohren (1;2), die aus einem Mediumrohr (3) aus Stahl, einem Mantelrohr (4) aus Kunststoff und einer Schaumstofffüllung (5) dazwischen bestehen, wobei an den zu verbindenden Enden die Mediumrohre (3) freiliegen und verschweißt (6) werden und dann darüber die Lücken zwischen den Mantelrohren (4) und den Schaumstofffüllungen (5) geschlossen werden durch bündiges Einsetzen eines Mantelrohr-Zwischenstücks (11) von gleichem Material und gleicher Wanddicke wie die Mantelrohre (4) und Ausschäumen (14) des vorhandenen Zwischenraumes, wobei das Zwischenstück (11) durch Schweißnähte, insbesondere V-Nähte, an den Stoßstellen mit den beiden angrenzenden Mantelrohren (4) verbunden und an einem Längsdurchschnitt (12) geschlossen wird und an diesem dafür eine Abstützung (8) von innen her vorgesehen ist, die mit eingeschäumt wird,
dadurch gekennzeichnet, daß die beiden Enden (7) der angrenzenden Schaumstofffüllungen am Umfang freigelegt werden und als die Abstützung eine Brücke (8) über die Lücke zwischen den Schaumstofffüllungen (5) gelegt und auf den freigelegten Enden (7) der Schaumstofffüllungen (5) abgestützt wird und dann das Mantelrohr-Zwischenstück (11) über die freigelegten Enden (7) und die Brücke (8) gelegt und verschweißt wird.

2. Verfahren nach Anspruch 1,
dadurch gekennzeichnet, daß eine Brücke (8) aus einem, vorzugsweise aus Blech gekanteten, U-Profil verwendet wird, dessen Schenkel (9) in die Schaumstofffüllungen (5) eingedrückt werden.

## Claims

1. A method of joining heating pipes (1; 2), which consist of a central pipe (3) made from steel, a pipe casing (4) made from plastics and a plastics foam filling (5) therebetween, the central pipes (3) at the ends to be joined being uncovered and welded (6) and then over them the gaps between the pipe casings (4) and the foam fillings (5) being closed by the flush insertion of a pipe casing spacer (11) made from the same material and having the same thickness as the pipe casings (4) and the existing space being filled with foam (14), the spacer (11) being joined to the two adjacent pipe casings (4) at the joints and being closed at a longitudinal slit (12) by welded seams, particularly V seams,for which purpose an internal support (8), which is embedded with in the foam at the same time, is provided,
characterised in that the two ends (7) of the adjacent foam fillings are uncovered at the periphery and, as the support, a bridge (8) is laid over the gap between the plastics foam fillings (5) and is supported on the uncovered ends (7) of the foam fillings (5) and then the pipe casing spacer (11) is laid over the uncovered ends (7) and the bridge (8) and welded.

2. A method according to Claim 1,
characterised in that a bridge (8) made from a U-profile which is preferably bent from sheet, is used, the legs (9) of which are pressed into the foam fillings (5).

## Revendications

1. Procédé pour la jonction de conduites de transport à distance (1;2) d'énergie thermique, qui comportent un tube de transport (3) en acier, un tube enveloppe (4) en matière plastique et une mousse de remplissage (5) comprise entre ceux-ci, les extrémités à relier des tubes de transport (3) étant libres et soudées (6) et les interstices entre les tubes d'enveloppe (4) et les mousses de remplissage (5) étant ensuite obturés sur la soudure par insertion bout à bout d'un élément intermédiaire (11) de tube enveloppe (11) en un même matériau et de même épaisseur d'enveloppe que le tube d'enveloppe (4) et par moussage (14) dans l'interstice, l'élément intermédiaire (11) étant relié aux deux tubes d'enveloppe adjacents (4), à l'endroit des joints, et fermé le long d'une coupe longitudinale (12) par des joints de soudure, notamment des joints en V et ledit élément intermédiaire comportant pour ce faire un appui interne (8) noyé dans la mousse,
caractérisé en ce qu'on dégage les deux extrémités (7) des mousses de remplissage adjacentes et en ce qu'on utilise, comme appui, un pont (8) sur l'interstice entre les mousses de remplissage (5), déposé sur les extrémités dégagées (7) des mousses de remplissage (5), en ce qu'on dépose ensuite l'élément intermédiaire de tube d'enveloppe (11) sur les extrémités dégagées (7) et sur le pont (8) et en ce qu'on le soude.

2. Procédé selon la revendicaton 1
caractérisé en ce qu'on utilise un pont (8) ayant un profilé en U, de préférence en une feuille métallique pliée, dont les montants (9) sont enfoncés dans les mousses de remplissage (5).

Fig.1

Fig.2

Fig.3

Fig.4

Fig.5

Fig.6

Fig.7